Europäisches Patentamt

European Patent Office

Office européen des brevets

(11) Publication number: **0 016 884**
A1

# EUROPEAN PATENT APPLICATION

(21) Application number: 79301971.2

(22) Date of filing: 21.09.79

(51) Int. Cl.³: **B 65 G 7/12**, B 25 G 3/00

(30) Priority: 22.03.79 US 22700

(43) Date of publication of application: 15.10.80
Bulletin 80/21

(84) Designated Contracting States: **AT BE CH DE FR GB IT LU NL SE**

(71) Applicant: **Slocum, Arthur G., 55 Reed Boulevard Apt. 1, Mill Valley California 94941 (US)**

(72) Inventor: **Slocum, Arthur G., 55 Reed Boulevard Apt. 1, Mill Valley California 94941 (US)**

(74) Representative: **Harrison, David Christopher et al, MEWBURN ELLIS & CO 70 & 72 Chancery Lane, London WC2A 1AD (GB)**

(54) **Attachable carrying handle.**

(57) An attachable carrying handle (10) allows a person, operating one-handedly and without bending his back, easily to engage a container (48), lift it from the floor and transport it to another location. The attachable carrying handle includes two arms (12, 14) having prongs (16, 18) for engaging the container. The two arms are secured together by a pliable hinge (30) and means (e.g. rubber tensioning member 38) are provided for resiliently connecting the two arms (12, 14) in such a manner that they are urged together. The position of interaction between such means (38) and the arms may be adjustable.

# ATTACHABLE CARRYING HANDLE

The present invention relates to attachable carrying handles and, in particular, to carrying handles for quickly and easily engaging and transporting articles such as, boxes, sacks and the like.

A number of prior art carrying handles exist. However, many of these have been designed for specific carrying functions and thus are inappropriate for carrying a wide variety of items. A review of the art discloses a handling tool, designed specifically for carrying concrete blocks, described in U.S. Patent No.2,657,571, and a receptacle handle for carrying open boxes as, for example, food and vegetable boxes, discussed in U.S. Patent No. 2,800,353. A further device which has only a specific application is the jar lifter described in U.S. Patent No. 2,522,243.

Two prior art devices are designed to accept boxes of varying sizes. The first device described in U.S. Patent No.1,849.364 is an adjustable hook. The hook has a telescoping body adapted to accommodate varying box sizes and two sets of prongs which are dependent on said body. The hook has several disadvantages in that (1) it requires two hands to set it in place, adjust it and tighten it about the box, (2) it requires the operator to bend down to the level of the box, and (3) it requires that the operator again uses two hands to disengage the hook from the box.

Another box carrier is described in U.S. Patent No. 1,519,160. This carrier includes two arms secured by a hinge, each arm having a prong at one end. The other end of the arms provides a carrying handle: the hinge lies between the ends of that one arm. This box carrier has several disadvantages. Principal among these is the fact that the carrier would require some practice in order to be able to deploy it about a box, especially if he were using only one hand, because gripping of the box is due to a toggle action exerted by lifting the handle.

Further, the handle, extending from one of the arms, is off centre from the centre of gravity of the box, which depending on the shape of the box, could make the box more difficult and awkward to carry and is placed in such a way that the user will tend to want to twist his wrist so that the thumb points inwardly or outwardly when his arm is held by his side instead of the more natural position with the thumb pointing forward.

Lastly, the barrel hinge which was used allows substantial side play or misalignment between the arms, which would make it difficult to secure a box using just one hand and can entrap the user's hand or finger if he is not careful.

The present invention is directed to overcoming one or more of the problems as set forth above. The invention includes a handle adapted for carrying an article, which handle has first and second arms and means located at the ends thereof for engaging said article. The handle includes a pliable hinge linking the arms, and has means for resiliently connecting the arms together.

This handle is designed to be used with one hand, and is easy to position and orient with just a twist of the wrist. Further, the handle can be used either in a vertical or horizontal orientation, or any other desired orientation necessary to engage an item to be carried.

The pliable hinge, linking the ends of the arms remote from the prongs, can be designed so that the hand

of the operator will not be pinched between the arms and further so that there is no side play between the arms, which is particularly important when the handle is to be used in a non-vertical orientation to engage a box. The resilient connecting means insures that the prongs of the handle will be engaged with the box being lifted independently of any lifting force exerted on the handle and also because of this the handle can be formed so that there is a minimum of bending to engage a box position on the ground. The handle is designed such that the box can be picked up above its centre of gravity. Still further, because the pliable hinge offers a grip to the user the handle allows the user's hand to remain in a natural position by his side.

One embodiment of the invention will now be described with reference to the accompanying drawings, wherein:-

Figure 1 is a side elevational view of the embodiment,

Figure 2 is a cross-sectional view taken through lines 2-2 of Figure 1,

Figure 3 is a cross-sectional view taken through lines 3-3 of Figure 1,

Figure 4 is a cross-sectional view taken through lines 4-4 of Figure 1,

Figure 5 is a view of the handle being deployed about a box;

Figure 6 is a view of the handle deployed about a box, and

Figure 7 is a side elevational view of the handle of Figure 1 in a locked position.

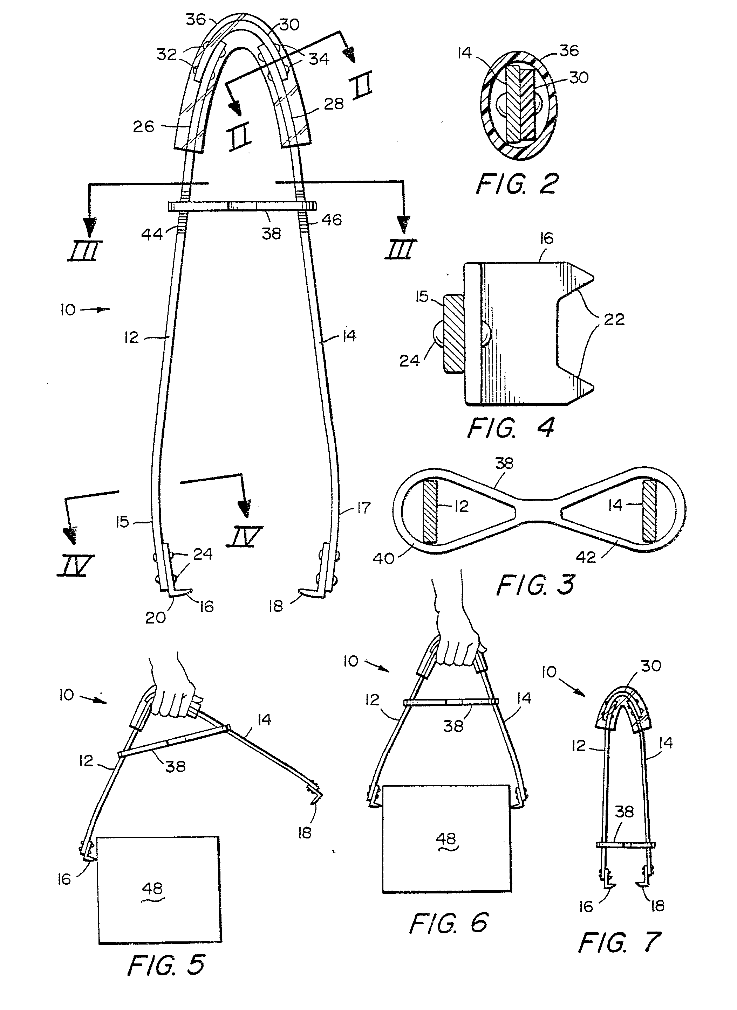

With reference to Figure 1, an attachable carrying handle 10 includes first and second bowed arms 12 and 14, respectively. Arms 12 and 14 are elongate and have a rectangular cross-section, as can be seen in Figure 3. In a preferred embodiment, arms 12 and 14 are of aluminium. which allows for the necessary strength required of handle 10, while allowing it to be as light as possible.

Secured to the lower end 15 and 17 of arms 12 and 14, respectively, are first and second sets of prongs 16 and 18, respectively. As can be seen in Figures 1 and 4, set 16 includes an L-shaped bracket 20 having prongs 22 extending therefrom in a plane which is substantially perpendicular to the plane of arm 12 at the point of attachment of bracket 22 to said arm. In a preferred embodiment, the first set of prongs 16 is of aluminium which has been bent or extruded to form the basic "L" shape and then machined to provide for the prongs. However, prongs 16 can be made of other materials depending on their intended use. As can be seen in Figure 1, rivets 24 are used to secure the first set of prongs 16 to arm 12. It is to be understood that the second set of prongs 18 is substantially similar to the first set of prongs 16 described above.

The upper portions 26 and 28 of arms 12 and 14, respectively, are secured together by a pliable hinge which is generally denoted 30. Hinge 30 is secured to each of the arms by rivets 32 and 34, respectively. As can be seen in Figure 2, the hinge 30 has a width that is only slightly less than the width of the arm. As will be discussed more fully hereinbelow, this comparatively great width of the hinge 30 adds rigidity to the hinged-together first and second arms 12 and 14 to reduce the amount of sideward play between the arms as the arms are positioned about and engage a box to be carried.

5.

In a preferred embodiment, the pliable hinge is a strip of an unbreakable thermoplastic which is sold under the name "Poly-hinge" and is available from Stokes Molded Products of Trenton, New Jersey, U.S.A. The hinge has resilient and elastic properties.

Disposed about the pliable hinge 30 and the upper portions 26 and 28 of arms 12 and 14 is a sleeve 36. So positioned, sleeve 36 protects the hand of the user or the handle 10 from being pinched between the arms as the handle is operated. In a preferred embodiment, sleeve 36 is made of a plastic, resilient, elastic material. Such tubing is quite extensively used in hospitals and is identified by the generic term "surgical tubing". Further, vacuum tube type hosing can be used. In actual construction in a preferred embodiment, the sleeve 36 is slid over the arms and into position about the hinge 30 prior to the attachment of first and second sets of prongs 16 and 18. Sleeve 36 and hinge 30 have a tendency to force the arms apart.

Disposed about arms 12 and 14 and slidable thereon between sleeve 36 and prong sets 16 and 18 is a resilient tension member 38. As can be seen in Figure 3, resilient tension member 38 is essentially shaped into a figure-of-eight, the first loop 40 of which is slidably disposed about arm 12 and the second loop 42 of which is slidably disposed about arm 14. In a preferred embodiment, resilient tension member 38 is comprised of a moulded rubber material. With the tension member 38 positioned adjacent the sleeve 36, prong sets 16 and 18 are spaced apart approximately 7.5 to 10 cms. With the resilient tension member 38 positioned adjacent the first and second prong sets 16 and 18, said prong sets are held in a lock position, spaced apart approximately 1 to 1.5 cm (Figure 7). With the tension member 38 so positioned, the attachable carrying handle 10 can be safely stored without any danger of the prongs accidentally engaging an object. It is noted that the edges of first and second arms are abraded slightly at areas 44 and 46. This abrasion aids in the retention of resilient tension member 38 in a desired position adjacent sleeve 36 (Figure 1) as the arms of said handle are spread apart to engage the item to be carried.

Alternatively, other resilient tension means can be used to resiliently secure the first and second arms. Such resilient tension means can include, for example, a tension spring which is disposed between said arms. Each end of said tension spring can be secured to a collar, slidingly disposed about each of said arms.

The operation of the attachable carrying handle is as follows. With the hand of the operator grabbing the handle about the sleeve 36, which thereby forms a handle means, the fingers of said hand are disposed between the first and second arms 12 and 14, respectively, with the thumb pointing substantially forwardly as depicted in Figure 5. The resilient tension member 38 is positioned adjacent the sleeve as depicted in Figure 1 such that in the stable condition of the handle the sets of prongs au spaced apart approximately 7.5 to 10 cms. With the attachable carrying handle 10 so configured, one set of prongs, such as set 16, can be placed in engagement with a portion of a box, such as the side of box 48, in Figure 5. With the set of prongs 16 engaged with the box 48, the hand of the operator can apply pressure against the arm 14 causing said arm to spread apart from first arm 12. When arm 14 has been spread apart sufficiently, set of prongs 18 can be placed about and engage the other end of the box 48 as is depicted in Figure 6. With the handle so positioned, the box can easily be picked up and carried by the operator. It is to be noted that due to the fact that the sets of prongs point upwardly as they engage the box, the weight of the box and the resilient tension members 38 insure that the box is properly impaled on the prongs, and thus, does not slip away from the attachable carrying handle as said handle is used to lift and transport the box.

Since the attachable carrying handle 10 can be operated with only one hand it can be used by a one-armed person and also there is a minimal or no necessity of bending down to place the handle about a box or other container or article which is resting on the floor. In fact, to attach the handle to such a box, all that is necessary is to slightly bend the knees, until the box can be approached with the handle, engage the handle with the box and lift up, using the leg muscles. With such an arrangement, the back muscles are not utilized, and thus the danger of back strain is eliminated.

Further, it is to be understood that the handle can be used in any orientation to approach and engage boxes. That is to say that the handle can be used vertically, horizontally or in any in between plane to grab a box relative to the top or side surfaces of the box. With a twist of the wrist, the handle can be oriented simply and efficiently to engage and then lift any box.

In the stored position, as shown in Figure 7, the resilient tension member 38 is slid to a position adjacent the sets of prongs 16 and 18 and hold the prongs, as previously discussed, to within about 1 to 1.5 cms of each other. With the prongs so closely

8.

positioned, and with the prongs oriented generally upwardly and inwardly as indicated in Figure 7, the handle can be stored without the danger of someone or something becoming accidentally fouled in the prongs.

CLAIMS:

1.      An attachable carrying handle including a first arm having at one end means adapted for engaging an article, a second arm having at one end means adapted for engaging the article, and a hinge means linking the arms characterised in that the hinge means is a pliable hinge (30) and is secured to the other ends of the first (12) and second (14) arm; there being means (38) for resiliently connecting the first arm (12) to the second arm (14).

2.      A handle according to Claim 1 wherein there is a tubular cover (36) over the pliable hinge (30) and over the ends of the arms to which the hinge is secured.

3.      A handle according to Claim 2 wherein the cover is a tube of an elastic plastics material.

4.      A handle according to any one of the preceding claims wherein the hinge is made of a thermoplastic material.

5.      A handle according to any one of the preceding claims wherein the hinge is a one-piece strap (30).

6.      A handle according to Claim 4 or Claim 5 wherein the hinge is made of an elastic plastics material.

7.      A handle according to any one of the preceding claims wherein the resilient connecting means (38) includes a first loop (40) disposed about the first arm (12) and a second loop (42) disposed about the second arm (14).

8.      A handle according to Claim 7 wherein the resilient connecting means (38) is made of an elastic material.

9.      A handle according to Claim 7 or Claim 8 wherein the resilient connecting means (38) defines a figure-of-eight.

10.     A handle according to any one of the preceding claims wherein the first and second arms (12,14) are bowed outwardly (15,17) between their ends.

FIG. 2

FIG. 4

FIG. 3

FIG. 5

FIG. 6

FIG. 7

## EUROPEAN SEARCH REPORT

| Category | DOCUMENTS CONSIDERED TO BE RELEVANT<br>Citation of document with indication, where appropriate, of relevant passages | Relevant to claim | CLASSIFICATION OF THE APPLICATION (Int. Cl.) |
|---|---|---|---|
| | US - A - 2 623 768 (V.D. GRIEVE)<br>* column 2, line 19 to column 3, line 17, fig. 1, 5 *<br>-- | 1 | B 65 G 7/12<br>B 25 G 3/00 |
| | US - A - 3 333 882 (S. SILVERMAN)<br>* column 1, line 49 to column 2, line 35; Fig. 2 *<br>-- | 1 | |
| | US - A - 4 032 181 (G.G. MONEY SR.)<br>* claim 1; fig. 1 *<br>-- | 1 | TECHNICAL FIELDS SEARCHED (Int.Cl.3)<br><br>A 45 F 5/00<br>B 25 G 3/00<br>B 65 D 25/28<br>B 65 G 7/12<br>H 01 M 2/10 |
| | DE - C - 1 047 722 (SKOGSDON AKTIE-BOLAG)<br>* claims 1,2 *<br>---- | 2,3,10 | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| X | The present search report has been drawn up for all claims |
|---|---|

| Place of search | Date of completion of the search | Examiner |
|---|---|---|
| Berlin | 16-06-1980 | HOFFMANN |

EPO Form 1503.1 06.78